**Europäisches Patentamt**

**European Patent Office**

**Office européen des brevets**

(11) Veröffentlichungsnummer: **0 474 121 B1**

(12) # EUROPÄISCHE PATENTSCHRIFT

(45) Veröffentlichungstag der Patentschrift: **15.03.95**

(51) Int. Cl.⁶: **G01F 1/80**

(21) Anmeldenummer: **91114562.1**

(22) Anmeldetag: **29.08.91**

(54) **Vorrichtung zur Messung eines Massestroms.**

(30) Priorität: **04.09.90 DE 4028141**

(43) Veröffentlichungstag der Anmeldung:
**11.03.92 Patentblatt 92/11**

(45) Bekanntmachung des Hinweises auf die
Patenterteilung:
**15.03.95 Patentblatt 95/11**

(84) Benannte Vertragsstaaten:
**AT BE DE ES FR GB GR NL**

(56) Entgegenhaltungen:
**EP-A- 0 196 440**
**DE-A- 2 530 602**
**DE-A- 2 544 976**

(73) Patentinhaber: **APPLIKATIONS- UND TECHNIK-
ZENTRUM FÜR ENERGIEVERFAHRENS-, UM-
WELT-, UND STRÖMUNGSTECHNIK
Kropfersrichter Strasse 6-8
D-92237 Sulzbach-Rosenberg (DE)**

(72) Erfinder: **Fassbinder, Hans-Georg, Dr. rer. nat.
Kropfersrichter Strasse 6-8
W-8458 Sulzbach-Rosenberg (DE)**

(74) Vertreter: **Geyer, Werner, Dr.-Ing. et al
Patentanwälte
GEYER & FEHNERS
Perhamerstrasse 31
D-80687 München (DE)**

# Beschreibung

Die Erfindung betrifft eine Vorrichtung zur Messung eines vorzugsweise mehrphasigen Massestroms nach dem Oberbegriff des Hauptanspruches.

Solche Vorrichtungen werden zur Messung des Durchsatzes von Schüttgut, insbesondere von pulverförmigen oder feinkörnigen Stoffen verwendet. Dabei wird das Schüttgut axial auf einen Drehteller geleitet, der radial verlaufende Leitschaufeln aufweist. Der Drehteller wird von einem Synchronmotor mit konstanter Drehzahl angetrieben und das Antriebsdrehmoment gemessen. Die durch die Umlenkung des axial eingeleiteten Schüttguts verursachte Veränderung des Drehmoments ist dabei ein direktes Maß für die Schwankungen des Schüttgut-Stromes.

Bei allen diesen Vorrichtungen besteht das Hauptproblem darin, das Drehmoment bzw. Bremsmoment genügend genau zu messen, wobei insbesondere zu berücksichtigen ist, daß die Welle des Drehelementes nicht nur vom Schüttgut-Strom, sondern auch von Reibungskräften abgebremst wird, welche aus der Lagerung der Antriebswelle selbst wie auch aus dem Getriebe der Messvorrichtung herrühren. Diese Reibungskräfte verändern sich sehr stark bei Temperaturschwankungen, da sich die Zähigkeit der für die Wellenlagerung benötigten Schmierstoffe ändert.

Aus der DE-PS 35 07 993 ist es beispielsweise bekannt, die aus der Meßvorrichtung herrührenden Störmomente dadurch zu kompensieren, daß die in einem Trägerelement angeordnete Zwischenwelle eines Antriebs-Stirnradgetriebes für das Drehelement um die zu dem Drehelement koaxiale Antriebswelle des Getriebes schwenkbar gelagert ist, wobei die Schwenkbewegung der Zwischenwelle bzw. des Trägerelementes von einer Kraftmeßeinrichtung begrenzt wird.

Diese bekannte Meßeinrichtung hat sich bewährt bis herab zu einem Meßbereich des Schüttgut-Stromes von 50 kg/min., für kleinere Masseströme reichte die Empfindlichkeit der Meßeinrichtung nicht mehr aus.

Aufgabe der Erfindung ist es, die Empfindlichkeit der Meßeinrichtung zur erhöhen und diese damit auch für die Messung kleinerer Masseströme einsetzbar zu machen.

Diese Aufgabe wird dadurch gelöst, daß bei der Vorrichtung nach dem Oberbegriff des Hauptanspruches die Welle in einem Wälzlager gelagert ist, dessen Innenring die Welle trägt und dessen Außenring in einem weiteren Wälzlager drehbar gelagert ist und von einem zusätzlichen Antrieb mit einer Drehzahl beaufschlagt wird, die mindestens gleich oder größer ist als die Drehzahl der Welle. Durch diese als "angetriebene Lagerung" zu bezeichnende Lagerung der das Turbinenrad tragenden Welle wird bereits eine erheblicher Störmoment-Anteil kompensiert, insbesondere wenn der Fall betrachtet wird, daß der Antrieb des Lageraußenringes drehzahlgleich mit der Welle erfolgt. Dann findet im die Welle tragenden Wälzlager zwischen Innen- und Außenring keine Relativbewegung mehr statt und die Welle ist in bezug auf die Kraftmeßeinrichtung reibungsfrei gelagert.

Vorteilhaft ist der Außenring des die Welle tragenden Wälzlagers über ein Zwischenstirnrad ebenfalls von einem auf der Welle des Antriebsmotors vorgesehenen Treibstirnrad angetrieben. Diese Ausbildung des Antriebes des die Welle tragenden Wälzlagers entspricht konstruktiv der Ausbildung des Stirnrad-Antriebes der Welle selbst, wobei jedoch das Zwischenstirnrad auf einer Welle drehbar befestigt ist, welche fest im Getriebegehäuse gelagert ist.

In weiterer vorteilhafter Ausbildung ist die Achse des Zwischenrades tangential beweglich zur Welle bzw. zur Achse des Treibstirnrades an der Kraftmeßeinrichtung aufgehängt, wobei für den Zusammenhang zwischen Bremsmoment M und der auf die Kraftmeßeinrichtung wirkenden Kraft K die Bedingung gilt: $K = 2M{:}R_1$ mit $R_1$ = Radius des Stirnrades. Hieraus ist ersichtlich, daß K die Summe aus zwei gleichgroßen Zahneingriffskräften $M{:}R_1$ aus den beiden gegenüberliegenden Zahneingriffsstellen zwischen dem Zwischenrad und dem Antriebsstirnrad der Welle einerseits und dem Zwischenrad und dem Treibstirnrad des Antriebsmotors andererseits ist.

Auf diese Weise kommt eine Verdoppelung des Meßsignals zustande, während dieses bei der aus der DE-PS 35 07 993 bekannten Vorrichtung halbiert wird.

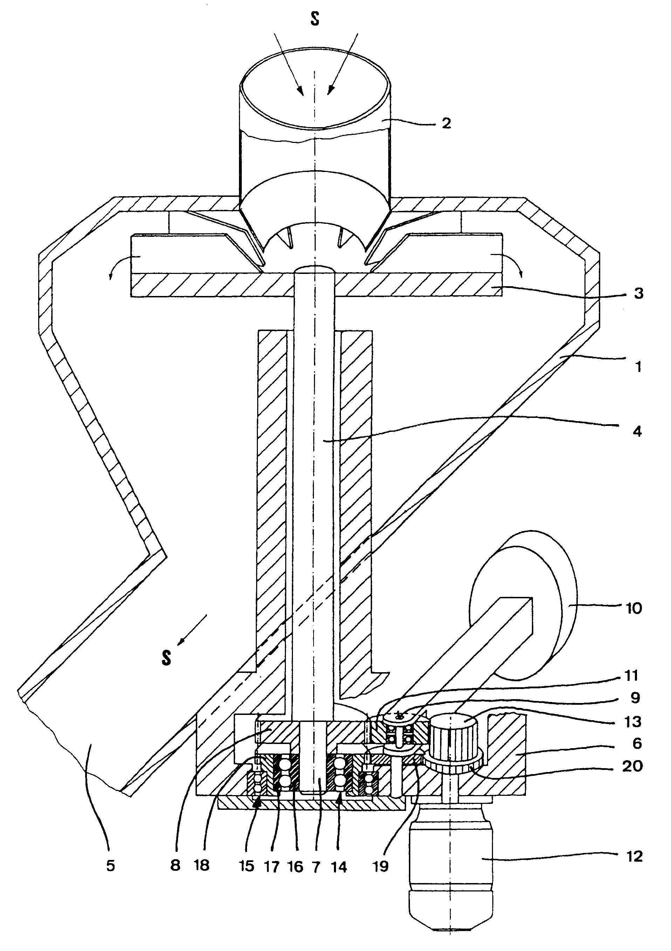

Eine Ausführungsform der Erfindung wird anhand der Zeichnung beispielsweise beschrieben.

Die Vorrichtung zur Messung eines vorzugsweise mehrphasigen Massestroms besteht im wesentlichen aus einem beispielsweise rotationssymetrisch ausgebildeten Gehäuse 1 mit einer axialen Materialeintrittsöffnung 2, unter welcher im Inneren des Gehäuses 1 koaxial ein Turbinenrad 3 auf einer vertikalen Welle 4 drehbar angeordnet ist.

Der axial durch die Eintrittsöffnung 2 in das Gehäuse 1 auf das Turbinenrad 3 einströmende Schüttgut-Strom S wird auf dem Turbinenrad 3 in radialer Richtung umgelenkt und von diesem sowohl in radialer als auch in tangentialer Richtung beschleunigt. Der Schüttgut-Strom verursacht dadurch ein Bremsmoment M an der Welle 4, welches dem Schüttgut-Strom direkt proportional ist und als Signal für die Messung des Schüttgut-Stromes verwendet wird.

Das von dem Turbinenrad 3 herausgeschleuderte bzw. herabfallende Schüttgut wird durch den Auslaß 5 aus dem Gehäuse 1 herausgeführt.

Die Messung des Schüttgut-Stromes erfolgt mit Hilfe eines in einem Getriebegehäuse 6 angeordneten Stirnradgetriebe, bestehend aus einem auf dem unteren Ende 7 der ebenfalls in dem Getriebegehäuse 6 gelagerten Welle 4 fest angeordneten Antriebsstirnrad 8, einem mit seiner Achse 9 beweglich an der Kraftmeßeinrichtung 10 vorgesehenen Zwischenstirnrad 11 und dem auf der Welle eines Antriebsmotors 12 vorgesehenen Treibstirnrad 13.

Die Achse 9 des Zwischenstirnrades 11 ist dabei tangential beweglich an der Kraftmeßeinrichtung 10 befestigt, das Zwischenstirnrad 11 kann also zwischen dem Treibstirnrad 13 und dem Antriebsstirnrad 8 begrenzt "wandern".

Das untere Ende 7 der das Turbinenrad 3 tragenden Welle 4 ist nicht unmittelbar in einer Wandung des Stirnradgehäuses 6 gelagert, sondern unter Zwischenschaltung eines Wälzlagers 14, welches wiederum über ein zweites Wälzlager 15 in dem Getriebegehäuse 6 gelagert ist.

Das Ende 7 der Welle 4 ist dabei fest in dem Innenring 16 des Wälzlagers 14, der Außenring 17 dieses Wälzlagers 14 wiederum in dem Wälzlager 15 befestigt.

Der Außenring 17 des Wälzlagers 14 weist einen verzahnten Ring 18 auf, welcher über ein weiteres Zwischenstirnrad 19, das mit seiner Achse fest im Getriebegehäuse 6 gelagert ist, von dem Antriebsmotor 12 angetrieben wird, und zwar über ein ebenfalls auf der Welle des Antriebsmotors 12 vorgesehenes Treibstirnrad 20.

Selbstverständlich kann an Stelle einer solchen vorbeschriebenen Stirnradanordnung auch ein Antrieb über Treibriemen oder über eine Kette und gegebenenfalls auch über einen weiteren Synchronmotor möglich sein.

Wird der Außenring 17 des Wälzlagers 14 drehzahlgleich mit der Welle 4 angetrieben, findet zwischen Innenring 16 und Außenring 17 des Wälzlagers 14 keine Relativbewegung mehr statt und die Welle 4 ist in bezug auf die Kraftmeßeinrichtung 10 reibungsfrei gelagert. Das Wälzlager 14 hat in diesem Fall die Aufgabe, kleine Schwenkbewegungen zu ermöglichen, die zur Betätigung der Kraftmeßeinrichtung 10 erforderlich sind. Diese Schwenkbewegungen betragen nur wenige Winkelgrade und werden aufgrund der vorbeschriebenen Lagerung reibungsfrei übertragen, bedingt dadurch, daß das Wälzlager 14 bei laufender Vorrichtung Schwingungen ausgesetzt ist, die vom Zahneingriff der Stirnräder herrühren.

Diese Anordnung kompensiert genau den Einfluß des Reibmomentes der Welle 4, nicht aber das von dem Zwischenstirnrad 11 der Kraftmeßeinrichtung 10 stammende Reibmoment. Dieses Reibmoment des Zwischenstirnrades 11 ist nun aber sehr gering, bei der hier beschriebenen Anordnung wurde herausgefunden, daß der durch Reibung bedingte Einfluß des Zwischenstirnrades 11 auf das Ausgangssignal um den Faktor 5 kleiner ist als derjenige der Welle 4.

Dieser Fehler kann in einfacher Weise dadurch ausgeschaltet werden, daß der Antrieb des Wälzlagers 14 so gewählt wird, daß der Außenring 17 gegenüber der Welle 4 mit geringfügig erhöhter Drehzahl angetrieben wird. Diese Drehzahlerhöhung wurde experimentell ermittelt und beträgt ca. 10 % der Drehzahl der Welle 4.

Die auf diese Weise erzielte Kompensation des Reibungseinflusses erwies sich als äußerst stabil. Als besonders vorteilhaft stellte sich heraus, daß eine individuelle Trimmung jedes einzelnen Gerätes entfallen kann, wenn die optimale Drehzahlerhöhung einmal aufgefunden wurde.

## Patentansprüche

1. Vorrichtung zur Messung eines vorzugsweise mehrphasigen Masse-Stromes, mit einem von einer Welle (4) getragenen Turbinenrad (3), das mit konstanter Drehzahl angetrieben und von dem Masse-Strom (S) axial beaufschlagt wird, diesen umlenkt und ihm eine sowohl radiale als auch tangentielle Geschwindigkeitskomponente erteilt, wobei die Welle (4) ein Antriebsstirnrad (8) trägt, welches mit einem Zwischenstirnrad (11) im Eingriff ist, das von einer Kraftmeßeinrichtung (10) in seiner Lage festgehalten wird und einen zweiten gegenüberliegenden Zahneingriff mit einem von einem Antriebsmotor 12 angetriebenen Treibstirnrad (13) aufweist, **dadurch gekennzeichnet,** daß die Welle (4) in einem Wälzlager (14) gelagert ist, dessen Innenring (16) die Welle (4) trägt und dessen Außenring (17) in einem weiteren Wälzlager (15) drehbar gelagert ist und von einem zusätzlichen Antrieb mit einer Drehzahl beaufschlagt wird, die mindestens gleich oder größer ist als die Drehzahl der Welle (4).

2. Vorrichtung nach Anspruch 1, **dadurch gekennzeichnet,** daß der Außenring (17) des die Welle (4) tragenden Wälzlagers (14) über ein Zwischenstirnrad (19) ebenfalls von einem auf der Welle des Antriebsmotors 12 angeordneten Treibstirnrad 20 angetrieben ist.

3. Vorrichtung nach Anspruch 1, **dadurch gekennzeichnet,** daß die Achse (9) des Zwischenstirnrades (11) tangential beweglich zur Welle (4) bzw. zur Achse des Treibstirnrades (13) an der Kraftmeßeinrichtung (10) aufgehängt ist, wobei für den Zusammenhang zwischen Bremsmoment M und der auf die Kraftmeßeinrichtung wirkenden Kraft K die Bedingung gilt: K = 2M:R$_1$ und R$_1$ = Radius des Antriebsstirnrades (8).

## Claims

1. A device for measuring a preferably multiphase mass flow, with a turbine wheel (3) which is carried by a shaft (4) and which is driven at a constant rotational speed and is loaded axially by the mass flow (S), deflects the latter and imparts a both radial and tangential speed component to it, the shaft (4) carrying a main-drive spur wheel (8) which is in engagement with an intermediate spur wheel (11) which is held in its position by a force-measuring arrangement (10) and which has a second opposite meshing engagement with a driving spur wheel (13) driven by a drive motor (12), characterized in that the shaft (4) is mounted in a rolling bearing (14), the inner ring (16) of which carries the shaft (4) and the outer ring (17) of which is mounted rotatably in a further rolling bearing (15) and is loaded by an additional drive with a rotational speed which is at least equal to or higher than the rotational speed of the shaft (4).

2. A device according to claim 1, characterized in that the outer ring (17) of the rolling bearing (14) carrying the shaft (4) is likewise driven via an intermediate spur wheel (19) by a driving spur wheel (20) located on the shaft of the drive motor (12).

3. A device according to claim 1, characterized in that the axle (9) of the intermediate spur wheel (11) is suspended on the force-measuring arrangement (10) so as to be tangentially movable relative to the shaft (4) or to the axle of the driving spur wheel (13), the condition: K = 2M:R$_1$ applying to the relation between the braking torque M and the force K acting on the force-measuring arrangement, and R$_1$ being the radius of the main-drive spur wheel (8).

## Revendications

1. Dispositif pour mesurer le débit d'un flux massique, de préférence multiphase, comportant une roue de turbine (3) supportée par un arbre (4), roue qui est entraînée à une vitesse de rotation constante et frappée axialement par ledit flux massique (S), le détourne et lui imprime une composante, tant radiale que tangentielle, de sa vitesse, tandis que ledit arbre (4) supporte une roue droite d'entraînement (8), laquelle vient en prise avec une roue droite intermédiaire (11), elle-même maintenue dans sa position par un dispositif dynamométrique (10) et s'engrène par ailleurs du côté opposé dans une roue droite conductrice entraînée par le moteur (12), caractérisé en ce que l'arbre (4) est supporté dans un palier à roulement (14) dont la bague intérieure (16) supporte ledit arbre (4) et dont la bague extérieure (17) est montée de manière rotative dans un autre palier à roulement (15) et est entraînée par un moteur complémentaire qui lui imprime une vitesse de rotation qui est au moins égale ou supérieure à la vitesse de rotation de l'arbre (4).

2. Dispositif selon la revendication 1, caractérisé en ce que la bague extérieure (17) du palier à roulement (14) supportant l'arbre (4) est entraînée par l'intermédiaire d'une roue droite intermédiaire (19), et également par une roue droite conductrice (20) disposée sur l'arbre du moteur d'entraînement (12).

3. Dispositif selon la revendication 1, caractérisé en ce que l'axe (9) de la roue droite intermédiaire (11) est suspendu sur le dispositif dynamométrique (10) de manière tangentiellement mobile à l'arbre (4) ou à l'axe de la roue droite conductrice (13), la relation entre le couple de freinage M et la force K agissant sur le dispositif dynamométrique devant répondre à la condition : K = 2M:R$_1$ où R$_1$ = rayon de la roue frontale d'entraînement (8).